# EUROPÄISCHE PATENTSCHRIFT

(11) **EP 1 243 477 B1**
(45) Veröffentlichungstag und Bekanntmachung des Hinweises auf die Patenterteilung: **19.10.2005**
(21) Anmeldenummer: 02002919.5
(22) Anmeldetag: 09.02.2002
(51) Int. Cl.: B60R 19/48, B60R 19/24

(54) **Aufnahme- und Verbindungsvorrichtung für eine Bug/Heckschürze eines Kraftfahrzeugs**
Accessories holder and connecting device for a motor vehicle front/rear fascia panel
Dispositif de support d'accessoires et de montage pour un panneau d'habillage avant/arrière de véhicule automobile

(30) Priorität: 22.03.2001 DE 10114018
(43) Veröffentlichungstag der Anmeldung: 25.09.2002
(73) Patentinhaber: Dr.Ing. h.c.F. Porsche Aktiengesellschaft, 70435 Stuttgart (DE)
(72) Erfinder: Palmer, Eberhard, 71665 Vaihingen (DE); Ritz, Thomas, 71134 Aidlingen (DE)

(56) Entgegenhaltungen:
- EP-A- 0 673 806
- DE-A- 19 637 512
- DE-A- 19 803 402
- US-A- 4 700 977

## Beschreibung

Die Erfindung bezieht sich auf eine Aufnahme- und Verbindungsvorrichtung für eine Bug/Heckschürze eines Kraftfahrzeugs nach dem Oberbegriffs des Anspruchs 1.

Aus der DE 198 03 402 A1 ist ein leistenartiges Halteteil zum Verbinden eines Formteils mit einem Karosseriekörper bekannt. Des Weiteren ist aus der EP 0 417 654 A1 eine Führungsschiene zum Befestigen eines Formteils an einer Karosseriewand bekannt. Die Führungsschiene weist hierzu zwei beabstandet zueinander angeordnete Stege auf, zwischen denen ein Schenkel des Formteils, wie ein Stoßfänger, angeordnet wird. Des Weiteren ist aus der DE 37 40 787 A1 ein profilierter Stoßfängerträger bekannt, an dem sich ein Stoßfängerüberzug abstützt. Aus der EP 673 806 B1 ist eine Vorrichtung gemäß dem Oberbegriff von Anspruch 1 zur Montage einer Stoßstange an einer Kraftfahrzeugkarosserie bekannt, wobei mit einem Seitenteil eine Befestigungsfläche verbunden ist, welche mit einem Verbindungsteil an einer Stoßstange zusammenwirkt, wobei das Verbindungsteil auf die Befestigungsfläche des Seitenteils aufgeschoben wird.

Aufgabe der Erfindung ist es, eine Aufnahme- und Verbindungsvorrichtung für eine Bug/Heckschürze eines Kraftfahrzeugs zu schaffen, die einfach an einem Seitenteil zu montieren ist und eine sichere Verbindung zwischen Bug/Heckschürze und Seitenteil gewährleistet und Aufnahmemöglichkeiten von Aggregaten aufweist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass in den Eckbereichen der Bug/Heckschürze jeweils ein Trägerteil angeordnet ist, das sowohl eine Verstärkung bewirkt als auch eine sichere Verbindungsmöglichkeit zum Kotflügel bzw. zum Seitenteil der Fahrzeugkarosserie herstellt. Außerdem kann das Trägerteil sowohl zur Befestigung einer Radschale als auch zur Lagerung von Fahrzeugaggregaten verwendet werden. Die Verwendung der Vorrichtung ist gleichermaßen für eine Bug- und Heckschürze geeignet. Nachfolgend wird nur noch auf die Bugschürze Bezug genommen.

Dies wird dadurch erzielt, in dem die Bugschürze mit einem innenliegenden Trägerteil verbunden ist. Dieses weist eine Gitterstruktur auf und ist mit einem obenliegenden leistenartigen Halteprofil für das Seitenteil und stirnseitige Verbindungsaufnahmen für eine Radhausschale versehen. Im Innenliegenden Trägerteil sind Befestigungsansätze für ein Gehäuse eines Seitenblinkers sowie Aufnahmen für eine Scheibenreinigungsanlage und Anschraubpunkte für Kabelstränge vorgesehen.

Die Bugschürze bildet mit dem Trägerteil eine vormontierbare Baueinheit, welche aus Geräuschgründen im Wesentlichen zur Bugschürze hin frei liegt. Hierzu ist das Trägerteil über das Halteprofil sowie über Laschen und einer Abstützung mit der Bugschürze verbunden. Das Halteprofil ist im Querschnitt U-Profilförmig ausgeführt und erstreckt sich zu mindestens über die Länge des Trägerteils. Das Halteprofil ist mit seinem außenliegenden Schenkel mit einer Abwinkelung der Bugschürze verbunden, wobei der Steg des Halteprofils im montierten Zustand anliegend zur Innenfläche der Bugschürze ist. Das Trägerteil ist des Weiteren am unteren Begrenzungsrand der Bugschürze über die Laschen auf verschmelzbaren Vorsprüngen des Trägerteils gehalten und festsetzbar. Durch die Anbindung des Trägerteils über das Halteprofil und die weiteren Verbindungen wird eine gewisse zusätzliche Steifigkeit der Bugschürze erzielt.

Eine Verbindung der Bugschürze mit dem Seitenteil erfolgt in dem leistenartigen Halteprofil, das in die Führungsschiene des Seitenteils eingeschoben wird. Hierzu weist das Halteprofil im Profilsteg vorragende Klemmaufnahmen auf, die jeweils eine vorstehende Schrägfläche mit einem Längsschlitz besitzt. In den Klemmaufnahmen ist die Führungsschiene des Seitenteils mit korrespondierenden Klemmelementen einsetzbar. Die Klemmelemente weisen eine an einem Steg angeformte, schräg verlaufende Zunge auf, die eine Anstellung entsprechend der Schrägfläche der Klemmaufnahme besitzt.

Zudem ist die Führungsschiene mit gegenüberstehenden Schenkeln versehen, die zwischen sich den außenliegenden Schenkel des Halteprofils mit Abwinkelung der Bugschürze aufnehmen.

Nach einer weiteren Ausführung der Erfindung kann einer der Schenkel der Führungsschiene auch aus mehreren Laschen bestehen, die einem durchgehenden Schenkel gegenüberstehen und zwischen den Laschen und dem Schenkel der außenliegende Schenkel des Halteprofils mit Abwinkelung der Bugschürze aufgenommen wird.

Das Trägerteil stützt sich mit einem Aufnahmepunkt für die Radhausschale stirnseitig an einer vorragenden Rippe der Bugschürze ab und die Radhausschale sowie das Trägerteil sind über eine Befestigungsschraube an dieser Rippe abgestützt. Hierdurch wird in vorteilhafter Weise erreicht, dass sich einerseits das Trägerteil an der Rippe abstützen kann und andererseits ist eine einfache Befestigung einer Radhausschale möglich.

Des Weiteren weist das Trägerteil eine einer Außenöffnung in der Bugschürze entsprechende von einem Steg teilweise umrandete und stirnseitig offene Öffnung auf, in welcher das Gehäuse des Seitenblinkers angeordnet ist, und das Gehäuse über zwei beabstandete Aufnahmen stirnseitig des Trägerteils über Schrauben befestigbar ist. Durch diese Ausbildung des Trägerteils kann das Gehäuse für den Seitenblinker in das Trägerteil integriert und gleichzeitig auch vormontiert werden.

Insgesamt kann nach der Erfindung das Trägerteil zur Versteifung und zur einfachen Verbindung mit dem Seitenteil herangezogen werden. Darüber hinaus ist die vormontierte Aufnahme und Befestigung von Aggregaten und Kabelzügen und dgl. möglich.

Ein Ausführungsbeispiel der Erfindung ist in den Zeichnungen dargestellt und wird im Folgenden näher beschrieben.

Es zeigen
- Fig. 1: eine schaubildliche Darstellung der am Seitenteil bzw. am Kotflügel montierten Bugschürze,
- Fig. 2: einen Schnitt nach der Linie II - II durch die Verbindungsstelle gemäß dem Kantenverlauf X - X,
- Fig. 3: ein Teil einer Führungsschiene mit Verbindungselement,

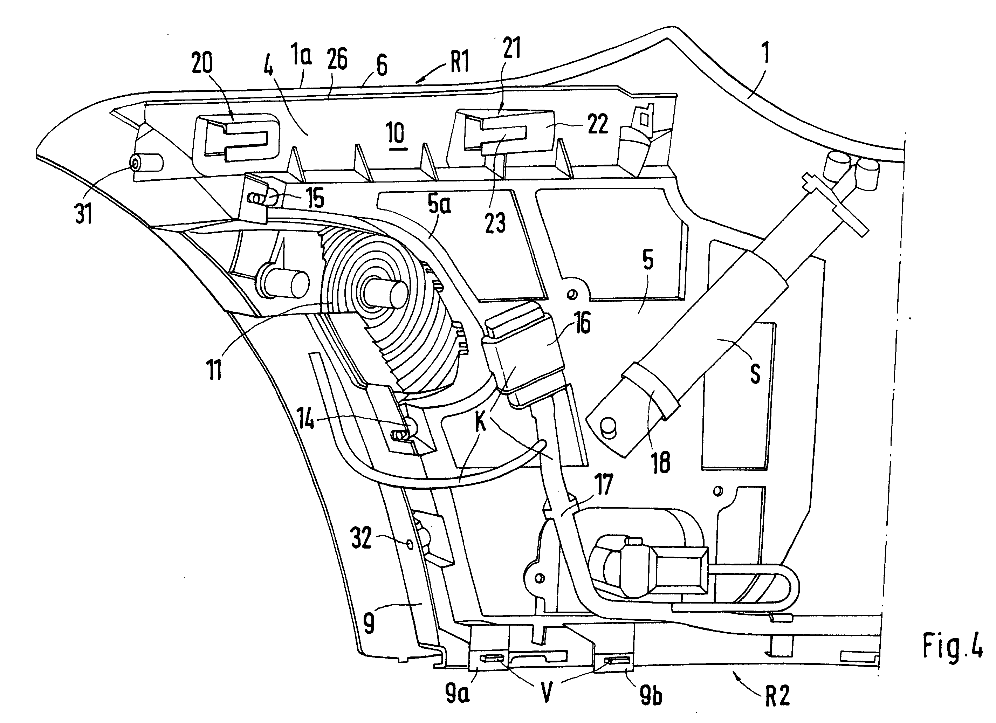

- Fig. 4: eine Innenansicht auf ein Trägerteil der Bugschürze mit Kabelsträngen, Gehäuse für Seitenblinker und einer Scheinwerferreinigungsanlage,

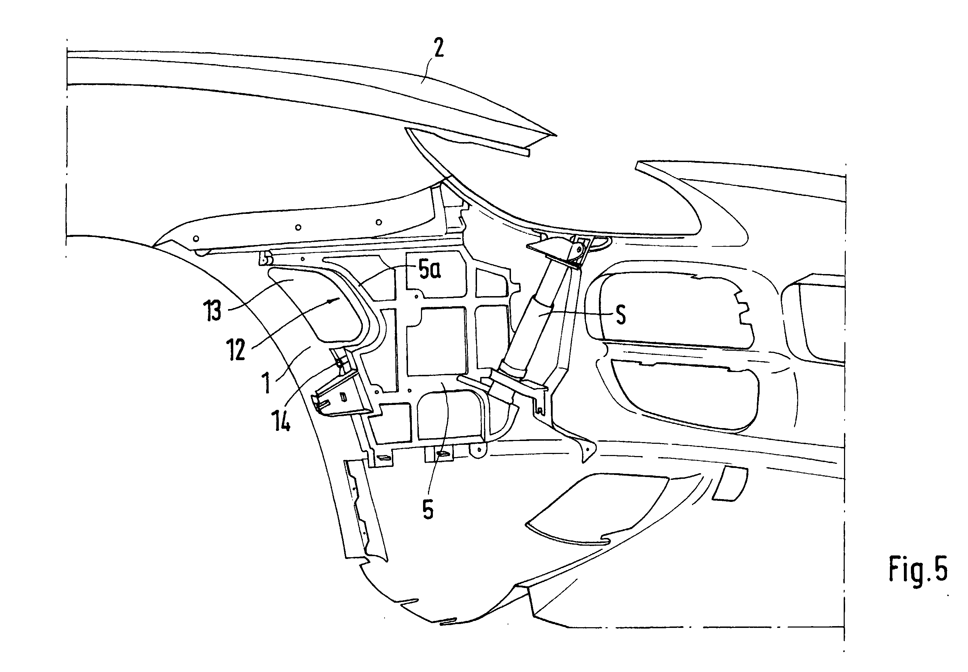

- Fig. 5: eine Gesamtansicht mit Trägerteil und am Seitenteil befestigt der Bugschürze und

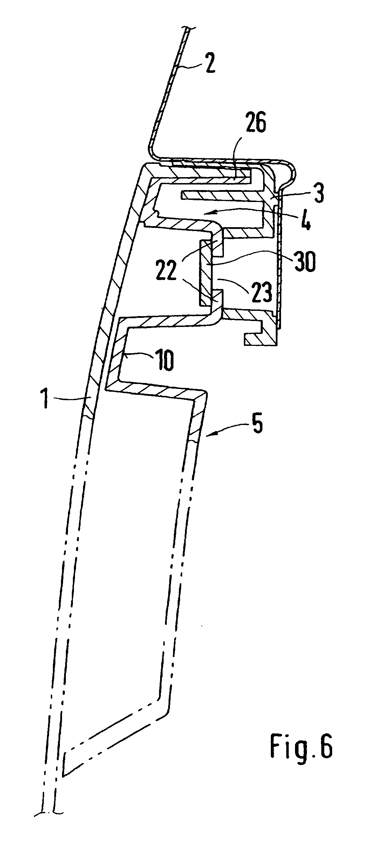

- Fig. 6: einen Schnitt durch die Führungsschiene und das Halteprofil im Bereich der Klemmelemente.

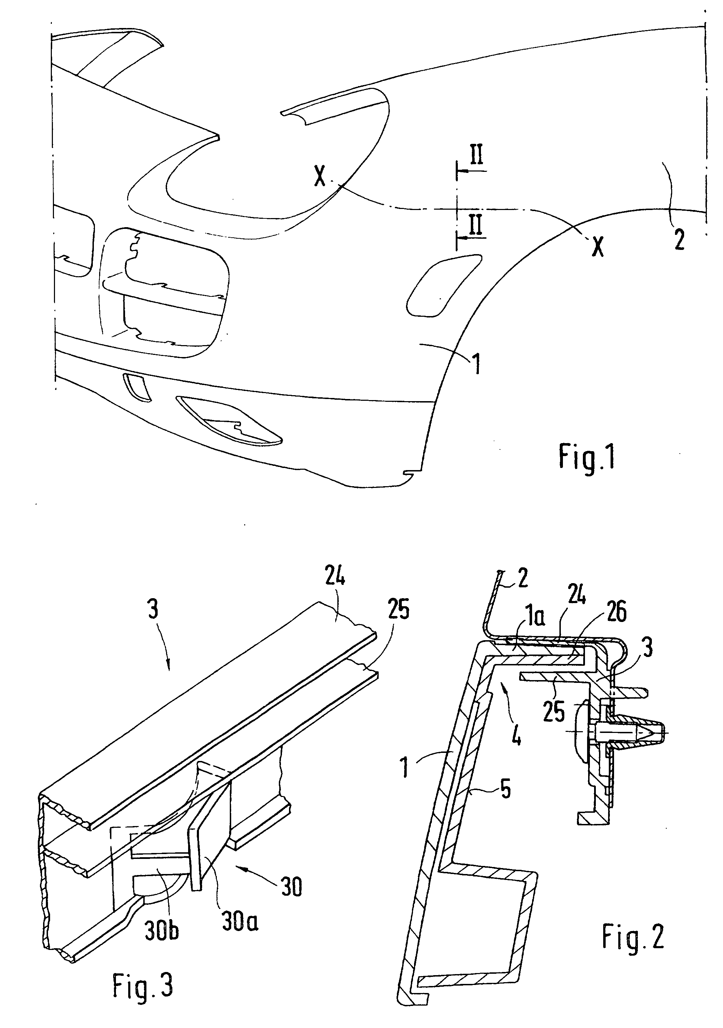

Wie in Fig. 1 zu erkennen ist, wird die Bug/Heckschürze 1 mit einem Seitenteil 2 verbunden bzw. an einem Kotflügel eines Kraftfahrzeugs befestigt. Die Verbindungsmittel bestehen im Wesentlichen aus einer leistenartigen Führungsschiene 3 am Seitenteil 2 und einem leistenartigen Halteprofil 4 an einem Trägerteil 5, das mit der Bugschürze 1 verbindbar ist.

Das Trägerteil 5 weist aus Gewichtsgründen eine Gitterstruktur auf und in diese Struktur ist das leistenartige Halteprofil 4 integriert, das aus einem im Querschnitt U-Profilförmige Teil besteht. Dieses Halteprofil 4 bildet einen oberen Abschluss des Trägerteils 5 und ist mit seinem äußeren Schenkel 26 in einer Abwinkelung 1a der Bugschürze 1 beispielsweise über eine Punktschweißung verbunden. Eine weitere Befestigung des Trägerteils 5 mit der Bugschürze 1 erfolgt am unteren Rand R2 über verschmelzbare Vorsprünge V, die in Schlitze von Laschen 9a, 9b des Trägerteils 5 eingreifen. Eine vorderseitige Abstützung des Trägerteils 5 erfolgt an einer vorragenden Rippe 9 der Bugschürze 1. Das Trägerteil 5 ist weitestgehend freiliegend zur Innenfläche der Bugschürze 1 gehalten, wobei im Wesentlichen nur ein Steg 10 des Halteprofils 4 flächig anliegt.

Mit dem Trägerteil 5 sind ein Gehäuse 11 für ein Seitenblinker sowie Kabelstränge K und es kann auch eine Scheinwerferreinigungsanlage S mit dem Trägerteil verbunden sein.

Zur Aufnahme des Gehäuses 11 weist das Trägerteil 5 eine teilweise umrandete Öffnung 12 auf, die korrespondierend zu einer Außenöffnung 13 in der Bugschürze 1 angeordnet ist. Eine Verbindung des Gehäuses 11 des Seitenlenkers mit dem Trägerteil 5 erfolgt über zwei stirnseitig angeordnete Befestigungsansätze 14, 15, über die mittels Schrauben das Gehäuse 11 festsetzbar ist. Der Kabelsatz K wird mittels mindestens zweier Anschraubpunkte 16, 17 mit dem Trägerteil 5 verbunden. Die Scheinwerferreinigungsanlage S ist über mindestens eine Aufnehme 18 am Trägerteil 5 gehalten.

Das Halteprofil 4 ist innenseitig des Steges 10 mit Klemmaufnahmen 20, 21 versehen, die in vorstehenden Schrägflächen 22 Längsschlitze 23 aufweisen. Z diesem Halteprofil 4 an der Bugschürze 1 ist im montierten Zustand gegenüberstehend die Führungsschiene 3 angeordnet. Diese nimmt zwischen zwei Schenkeln 24, 25 den äußeren Schenkel 26 des Halteprofils 4 mit Abwinkelung 27 der Bugschürze 1 auf. Die unmittelbare Verbindung der Führungsschiene 3 mit den Klemmaufnahmen 20, 21 des Halteprofils 4 erfolgt über korrespondierend zu den Klemmaufnahmen 20, 21 angeordnete Klemmelemente 30, die in die Aufnahmen 20, 21 eingeschoben und klemmend gehalten werden.

Die Montage der Bugschürze 1 auf dem Seitenteil 2 erfolgt, indem die Bugschürze 1 auf die Führungsschienen 3 der Seitenteile 2 geschoben und verklemmt werden. Im inneren des Seitenteiles 2 wird eine Radhausschale am Trägerteil 5 über Verbindungsaufnahmen 31, 32 gehalten.

## Patentansprüche

1. Aufnahme- und Verbindungsvorrichtung für eine Bug/Heckschürze (1) eines Kraftfahrzeugs, die mit einem Seitenteil (2), wie z.B. einem Kotflügel oder einer Seitenwand, über eine leistenartige Führungsschiene (3) am Seitenteil (2) befestigbar ist und die Bugschürze (1) mit einem separaten innenliegenden Trägerteil (5) zur Verbindung mit der Führungsschiene verbunden ist, **dadurch gekennzeichnet, dass** an einem oberen Rand (R1) des Trägerteils (5) ein leistenartiges, mit einem Steg (10) versehenes Halteprofil (4) für das Seitenteil (2) angeordnet ist und stirnseitige Verbindungsaufnahmen (31, 32) für eine Radhausschale aufweist und innenliegend des Trägerteils (5) Befestigungsansätze (14, 15) für ein Gehäuse (11) eines Seitenblinkers, eine Aufnahme (18) für eine Scheinwerferreinigungsanlage (S) sowie Anschraubpunkte (16, 17) für Kabelstränge (K) angeordnet sind.

2. Vorrichtung nach Anspruch 1, **dadurch gekennzeichnet, dass** das Trägerteil (5) über das Halteprofil (4) an seinem oberen Rand (R1) sowie über Laschen (9a, 9b) an seinem unteren Abschluss mit der Bug-/Heckschürze (1) verbindbar und weitestgehend freiliegend zur Innenfläche der Bug/Heckschürze (1) angeordnet ist.

3. Vorrichtung nach den Ansprüchen 1 oder 2, **dadurch gekennzeichnet, dass** das Halteprofil (4) im Querschnitt U-profilförmig ausgebildet ist und sich zumindest über die Länge des Trägerteils (5) erstreckt und mit einem außenliegenden Schenkel (26) des Trägerteils (5) eine Abwinkelung (1a) der Bug-/Heckschürze (1) verbunden ist, wobei der Steg (10) des Halteprofils (5) flächig anliegend an der Schürze (1) ist und das Trägerteil (5) an einem unteren Rand (R2) der Bug/Heckschürze (1) mittels verschmelzbarer Vorsprünge (V) der Schürze (1), die in die am unteren Abschluss des Trägerteils (5) eingreifen, gehalten und festsetzbar ist.

4. Vorrichtung nach den Ansprüchen 1, 2 oder 3, **dadurch gekennzeichnet, dass** der Steg (10) des Halteprofils (4) im Profilsteg (10) mit mindestens zwei vorragenden Klemmaufnahmen (20, 21) versehen ist, die vorstehende Schrägflächen (22) mit Längsschlitzen (23) aufweisen und in den Klemmaufnahmen (20, 21) eine Führungsschiene (3) des Seitenteils (2) mit korrespondierenden Klemmelementen (30) einsetzbar ist.

5. Vorrichtung den Ansprüchen 1, 2, 3 oder 4, **dadurch gekennzeichnet, dass** die Klemmelemente (30) der Führungsschiene (3) jeweils eine an einem hochstehenden Steg (30b) angeformte und schräg angestellte Zunge (30a) aufweisen, die etwa eine Winkellage entsprechend der Winkellage der Schrägflächen (22) der Klemmaufnahmen (20, 21) aufweisen.

6. Vorrichtung nach einem oder mehreren der vorhergehenden Ansprüche, **dadurch gekennzeichnet, dass** die Führungsschiene (3) gegenüberstehende Schenkel (24, 25) aufweist, die zwischen sich den außenliegenden Schenkel (26) des Halteprofils (4) mit der Abwinkelung (1a) der Bug/Heckschürze (1) aufnehmen.

7. Vorrichtung nach Anspruch 1 oder 5, **dadurch gekennzeichnet, dass** mindestens einer der Schenkel (24 oder 25) mehrere Laschen umfasst, denen ein durchgehender Schenkel (24, 25) gegenübersteht und zwischen den Laschen und dem Schenkel der außenliegenden Schenkel (26) des Trägerteils (5) mit der Abwinkelung (1a) der Bug/Heckschürze (1) aufgenommen ist.

8. Vorrichtung nach einem oder mehreren der vorhergehenden Ansprüche, **dadurch gekennzeichnet, dass** das Trägerteil (5) sich mit mindestens einer der Verbindungsaufnahmen (31, 32) für die Radhausschale stirnseitig an einer vorragenden Rippe (9) der Bug-/Heckschürze (1) abstützt und die Radhausschale sowie das Trägerteil (5) über mindestens eine Befestigungsschraube an dieser Rippe (9) abgestützt ist.

9. Vorrichtung nach einem oder mehreren der vorhergehenden Ansprüche, **dadurch gekennzeichnet, dass** das Trägerteil (5) eine einer Außenöffnung (12) in der Bug/Heckschürze (1) entsprechende von einem Steg (5a) teilweise umrandete und stirnseitig offene Öffnung (13) aufweist, in welcher das Gehäuse (11) eines Seitenlenkers angeordnet ist, das über zwei beabstandete Befestigungsansätze (14, 15) stirnseitig des Trägerteils (5) über Schrauben befestigbar ist.

10. Vorrichtung nach einem oder mehreren der vorhergehenden Ansprüche, **dadurch gekennzeichnet, dass** der Kabelsatz (K) am Trägerteil (5) in mindestens zwei Anschraubpunkten (16, 17) gehalten wird.

## Claims

1. A mounting and connecting device for a motor-vehicle front/rear apron (1) which is fixable to a side part (2), e.g. a wing or a side panel, by means of a strip-type guide rail (3) on the side part (2), and the front apron (1) is connected to a separate, inner carrier part (5) for connection to the guide rail, **characterised in that** a strip-type holding profile (4) for the side part (2) is provided with a web (10) and is arranged on an upper edge (R1) of the carrier part (5) and has end connecting mounts (31, 32) for a wheel-arch inner panel, and on the inside of the carrier part (5) are arranged mounting attachments (14, 15) for a housing (11) of a side indicator, a mount (18) for a headlight cleaning system (S) and screw-on points (16, 17) for cable assemblies (K).

2. A device according to claim 1, **characterised in that** the carrier part (5) is connectable to the front/rear apron (1) by means of the holding profile (4) on its upper edge (R1) and by means of plates (9a, 9b) on its lower boundary and is arranged so as to lie substantially freely in the direction of the inner surface of the front/rear apron (1).

3. A device according to claim 1 or 2, **characterised in that** the holding profile (4) is U-shaped in cross-section and extends at least over the length of the carrier part (5), and a return (1a) of the front/rear apron (1) is connected to an outer arm (26) of the carrier part (5), wherein the web (10) of the holding profile (5) [sic - 4] lies flat against the apron (1), and the carrier part (5) is held on and fixable to a lower edge (R2) of the front/rear apron (1) by means of fusible projections (V) of the apron (1), said projections (V) engaging in the [plates] on the lower boundary of the carrier part (5).

4. A device according to claim 1, 2 or 3, **characterised in that** the web (10) of the holding profile (4) is provided in the profiled web (10) with at least two projecting clamping mounts (20, 21) which have projecting inclined surfaces (22) with longitudinal slots (23), and a guide rail (3) of the side part (2) with corresponding clamping members (30) is insertable into the clamping mounts (20, 21).

5. A device according to claim 1, 2, 3 or 4, **characterised in that** the clamping members (30) of the guide rail (3) each have an inclined tongue (30a) formed on a projecting web (30b), the tongues (30a) having an angular position corresponding approximately to the angular position of the inclined surfaces (22) of the clamping mounts (20, 21).

6. A device according to one or more of the preceding claims, **characterised in that** the guide rail (3) has opposing arms (24, 25) which accommodate between them the outer arm (26) of the holding profile (4) with the return (1a) of the front/rear apron (1).

7. A device according to claim 1 or 5, **characterised in that** at least one of the arms (24 or 25) comprises a plurality of plates, opposite which is a continuous arm (24, 25), and between the plates and the arm is accommodated the outer arm (26) of the carrier part (5) with the return (1a) of the front/rear apron (1).

8. A device according to one or more of the preceding claims, **characterised in that** the end of the carrier part (5) is supported, by means of at least one of the connecting mounts (31, 32) for the wheel-arch inner panel, on a projecting rib (9) of the front/rear apron (1), and the wheel-arch inner panel and the carrier part (5) are supported on this rib (9) by means of at least one fixing screw.

9. A device according to one or more of the preceding claims, **characterised in that** the carrier part (5) has an opening (13) which is open at its end, corresponds to an outer opening (12) in the front/rear apron (1) and is partly surrounded by a web (5a) and in which the housing (11) of a side indicator is arranged, said housing (11) being fixable by screws by means of two spaced mounting attachments (14, 15) at the end of the carrier part (5).

10. A device according to one or more of the preceding claims, **characterised in that** the cable set (K) is held on the carrier part (5) at at least two screw-on points (16, 17).

## Revendications

1. Dispositif de support et de montage pour un tablier avant/arrière (1) d'un véhicule automobile qui peut être fixé à un élément latéral (2), tel que par exemple une aile ou une paroi latérale, par un rail de guidage (3) de type baguette sur l'élément latéral (2), et le tablier avant (1) est relié à un élément porteur (5) séparé situé à l'intérieur, en vue de la liaison avec le rail de guidage, **caractérisé en ce que** sur un bord supérieur (R1) de l'élément porteur (5) est disposé un profilé de retenue (4) de type baguette, pourvu d'un pontet (10), pour l'élément latéral (2), et comporte des logements de liaison (31, 32) frontaux pour le carénage d'un logement de roue et, à l'intérieur de l'élément porteur (5), sont disposés des appendices de fixation (14, 15) pour un boîtier (11) d'un clignotant latéral, un logement (18) pour un système de nettoyage des projecteurs (S) ainsi que des points de vissage (16, 17) pour des faisceaux de câbles (K).

2. Dispositif selon la revendication 1, **caractérisé en ce que** l'élément porteur (5) peut être relié, par le profilé de retenue (4), sur son bord supérieur (R1) ainsi que par des pattes (9a, 9b) sur sa terminaison inférieure, au tablier avant/arrière (1), et est disposé très largement dégagé vers la surface intérieure du tablier avant/arrière (1).

3. Dispositif selon les revendications 1 ou 2, **caractérisé en ce que** le profilé de retenue (4) présente une section transversale profilée en U et s'étend au moins sur la longueur de l'élément porteur (5), et est relié, par une aile (26) de l'élément porteur (5), située à l'extérieur, à un coude (1a) du tablier avant/arrière (1), le pontet (10) du profilé (4) s'appliquant à plat contre le tablier (1) et l'élément porteur (5) étant maintenu et pouvant être fixé à un bord inférieur (R2) du tablier avant/arrière (1), au moyen de saillies (V) fusibles du tablier (1), lesquelles s'engagent dans des fentes dans la terminaison inférieure de l'élément porteur (5).

4. Dispositif selon les revendications 1, 2 ou 3, **caractérisé en ce que** le pontet (10) du profilé de retenue (4) est pourvu dans le pontet de profilé (10) d'au moins deux logements de serrage (20, 21) saillants qui présentent des surfaces obliques (22) saillantes avec des fentes longitudinales (23) et, dans les logements de serrage (20, 21), peut être inséré un rail de guidage (3) de l'élément latéral (2) avec des éléments de serrage (30) correspondants.

5. Dispositif selon les revendications 1, 2, 3 ou 4, **caractérisé en ce que** les éléments de serrage (30) du rail de guidage (3) présentent chacun une languette (30a) formée sur une ailette (30b) verticale, et placée obliquement, laquelle présente approximativement une position angulaire correspondant à la position angulaire des surfaces obliques (22) des logements de serrage (20, 21).

6. Dispositif selon une ou plusieurs des revendications précédentes, **caractérisé en ce que** le rail de guidage (3) présente des ailes (24, 25) opposées qui reçoivent entre elles l'aile (26) située à l'extérieur du profilé de retenue (4) avec le coude (1a) du tablier avant/arrière (1).

7. Dispositif selon la revendication 1 ou 5, **caractérisé en ce qu'**au moins l'une des ailes (24) ou (25) comprend plusieurs pattes auxquelles fait face une aile (24, 25) continue et, entre les pattes et l'aile, est reçue l'aile (26) située à l'extérieur de l'élément porteur (5) avec le coude (1a) du tablier avant/arrière (1).

8. Dispositif selon une ou plusieurs des revendications précédentes, **caractérisé en ce que** l'élément porteur (5) prend appui, par au moins l'un des logements de liaison (31, 32) pour le carénage du logement de roue, frontalement, sur une nervure (9) saillante du tablier avant/arrière (1), et le carénage du logement de roue ainsi que l'élément porteur (5) sont soutenus sur cette nervure (9) par au moins une vis de fixation.

9. Dispositif selon une ou plusieurs des revendications précédentes, **caractérisé en ce que** l'élément porteur (5) présente une ouverture (13) partiellement entourée par un bord (5a) et correspondant à une ouverture extérieure (12) du tablier avant/arrière (1), dans laquelle est disposé le boîtier (11) d'un indicateur de direction latéral, qui peut être fixé, par des vis, sur le côté frontal de l'élément porteur (5), par l'intermédiaire de deux appendices de fixation (14, 15) espacés.

10. Dispositif selon une ou plusieurs des revendications précédentes, **caractérisé en ce que** le faisceau de câbles (K) est maintenu sur l'élément porteur (5) en au moins deux points de vissage (16, 17).
